Europäisches Patentamt

European Patent Office

Office européen des brevets

(11) Veröffentlichungsnummer: **0 062 177**
**B1**

(12) **EUROPÄISCHE PATENTSCHRIFT**

(45) Veröffentlichungstag der Patentschrift:
**08.10.86**

(51) Int. Cl.⁴: **G 01 N 1/30**

(21) Anmeldenummer: **82101976.7**

(22) Anmeldetag: **12.03.82**

(54) Thiazinfarbstoffe enthaltende Färbelösung und Verfahren zu ihrer Herstellung.

(30) Priorität: **28.03.81 DE 3112442**

(43) Veröffentlichungstag der Anmeldung:
**13.10.82 Patentblatt 82/41**

(45) Bekanntmachung des Hinweises auf die Patenterteilung:
**08.10.86 Patentblatt 86/41**

(84) Benannte Vertragsstaaten:
**AT BE CH DE FR GB IT LI NL SE**

(56) Entgegenhaltungen:
**FR - A - 2 402 204**
**US - A - 2 581 523**
**US - A - 4 193 980**

(73) Patentinhaber: **Merck Patent Gesellschaft mit beschränkter Haftung, Frankfurter Strasse 250, D-6100 Darmstadt (DE)**

(72) Erfinder: **Fischer, Wolfgang, Dr., Kröhweg 27, D-6100 Darmstadt (DE)**
Erfinder: **Link, Renate, Rossbergring 63, D-6107 Reinheim 5 (DE)**

EP 0 062 177 B1

ACTORUM AG

## Beschreibung

Die Erfindung betrifft Thiazinfarbstoffe enthaltende Färbelösungen und ein Verfahren zur Herstellung dieser Färbelösungen zum Anfärben von Zellkernen. Diese Lösungen werden in der Mikroskopie für cytologische oder histologische Kernfärbungen verwendet. Üblicherweise werden dafür Hämatoxylinlösungen eingesetzt, die nach verschiedenen Vorschriften hergestellt werden können (z.B. nach Delafield, Ehrlich, Mayer, Harris, Heidenhain, Weigert). Auch in jüngerer Zeit kommt einer Optimierung der Hämatoxylinfärbelösung noch Bedeutung zu (Acta Cytologica 18, 300–311 (1974)).

Anderseits versucht man schon seit längerem, das Hämatoxylin durch andere Farbstoffe zu ersetzen, da es als Naturprodukt nur beschränkt lieferbar und auch nicht immer in gleicher Qualität zu erhalten ist. Als Hämatoxylin-Ersatz sind in diesem Zusammenhang Oxazinfarbstoffe bekannt, die als Metallkomplexe Kernfärbungen geben können (Stain Techn. 3, 28–38 (1928); 41, 73–81 (1965)). Auch die Verwendung von Thiazinfarbstoffen für die Kernfärbung ist beschrieben, wobei z.B. die alkoholische Lösung von Thionin anstelle von Hämatoxylin in der Papanicolaou-Färbung eingesetzt wurde (Geburtsk. u. Frauenheilk. 39, 969–972 (1979)).

Diese Ersatz-Färbelösungen haben sich jedoch bisher nicht allgemein durchgesetzt. Beim Vergleich mit der Hämatoxylinfärbung treten verschiedene Nachteile auf, z.B. weniger gute Färbungen, längere Färbezeiten, störende Mitfärbung des Plasmas usw.

Der Erfindung liegt deshalb die Aufgabe zugrunde, eine Färbelösung zur Anfärbung von Zellkernen und ein Verfahren zur Herstellung einer solchen Lösung zur Verfügung zu stellen, wobei auf den Einsatz von Hämatoxylin verzichtet werden kann und dennoch optimale, der Hämatoxylinfärbung entsprechende Resultate erhalten werden können.

Überraschenderweise wurde gefunden, dass sich unter bestimmten Bedingungen spezielle Thiazinfarbstoffe sehr gut als Hämatoxylin-Ersatz zur cytologischen und histologischen Kernfärbung eignen.

Gegenstand der Erfindung ist eine Thiazinfarbstoffe enthaltende Färbelösung zur Anfärbung von Zellkernen, die dadurch gekennzeichnet ist, dass die Färbelösung mindestens einen mit Aluminium(III)-, Chrom(III)-, Mangan(II)-, Kobalt(II)- oder Nickel(II)-salzen behandelten Thiazinfarbstoff wie Toluidinblau O, Neumethylenblau und/oder Azur A enthält.

Ferner umfasst der Gegenstand der Erfindung ein Verfahren zur Herstellung einer Thiazinfarbstoffe enthaltenden Lösung zur Anfärbung von Zellkernen, das dadurch gekennzeichnet ist, dass man Toluidinblau O, Neumethylenblau und/oder Azur A in Wasser löst und mit Aluminium(III)-, Chrom(III)-, Mangan(II)-, Kobalt(II)- oder Nickel(II)-salzen behandelt.

Geeignete Thiazinfarbstoffe sind z.B. Toluidinblau O (C.I. Nr. 52040), Neumethylenblau (C.I. Nr. 52030) oder Azur A, vorzugsweise Toluidinblau O und Neumethylenblau. Die Farbstoffe können sowohl einzeln als auch als Gemisch eingesetzt werden. Die Konzentration der Farbstoffe in der Färbelösung sollte bei 0,2 bis 1,5, vorzugsweise bei 0,75 Gew.-% liegen.

Als Metallsalze können Verbindungen mit 3-wertigem Aluminium oder Chrom bzw. mit 2-wertigem Mangan, Kobalt oder Nickel verwendet werden. Bevorzugt sind Chrom(III)-salze wie Kaliumchromsulfat (Chromalaun), Chrom(III)-sulfat oder Chrom(III)-chlorid, vorzugsweise Kaliumchromsulfat, wobei die Konzentration der Chromsalze in der Färbelösung bei 2 bis 10, vorzugsweise bei etwa 5 Gew.-% liegt. Das Chromsalz liegt hierbei im Vergleich zum Farbstoff in mehrfach molarem Überschuss vor. Beim Toluidinblau O hat sich die etwa 6fache, beim Neumethylenblau die 17fache molare Chrommenge als besonders vorteilhaft erwiesen.

Die Herstellung der Lösung erfolgt vorteilhafterweise so, dass man das Metallsalz zunächst unter Rühren in Wasser auflöst. Anschliessend wird der Farbstoff hinzugegeben und die Lösung kurzzeitig, d.h. etwa 5 bis 15 Minuten, unter Rückfluss erhitzt. Vor dem Filtrieren wird diese Lösung mit der gleichen Menge Wasser verdünnt. Im Falle von Neumethylenblau kann das Erhitzen der Lösung entfallen, sie ist sofort gebrauchsfertig.

Die Anwendung erfolgt in Analogie zu den bisher bekannten Färbemethoden mit Thiazinfarbstoffen. Ein bevorzugtes Anwendungsgebiet für die erfindungsgemässe Färbelösung ist die Anfärbung von Zellabstrichen. Als Standardmethode hierfür wird seit Jahrzehnten in der gynäkologischen Zytodiagnostik zur Früherkennung von Genitalkrebs bei Frauen die Färbung nach Papanicolaou eingesetzt. Das Prinzip dieser Färbung besteht darin, dass die Abstriche, die Einzelzellen oder Zellverbände enthalten, mit mehreren Farbstofflösungen angefärbt werden, wobei bestimmte Farbstofflösungen bevorzugt das Zytoplasma anfärben und die Hämatoxylin enthaltenden Lösungen für die Kernfärbung notwendig sind. Anhand der Zellmorphologie können dann Krebszellen oder Vorstufen derselben erkannt werden.

### Beispiel 1
### Herstellung einer Kernfärbelösung

In 500 ml Wasser werden nacheinander unter Rühren 50 g Kaliumchromsulfat und 1,5 g Toluidinblau O gelöst. Die Lösung wird 10 Minuten lang unter Rückfluss gekocht. Anschliessend wird mit der gleichen Menge Wasser verdünnt und die Lösung filtriert.

### Beispiel 2
### Färbung nach Papanicolaou

Ein Vaginal-, Zervikal- oder Uterusausstrich wird sofort fixiert, indem der Objektträger für etwa 10 bis 15 Minuten in eine Lösung aus Ethanol/Ether 1:1 eingestellt wird. Die Fixierung des Ausstrichs kann auch durch Besprühen mit einem Fixationsspray erfolgen. Der so fixierte Abstrich wird wie folgt behandelt:

1) 5–10 s in destilliertem Wasser schwenken,

2) 3 min in die Toluidinblaulösung nach Beispiel 1 stellen,

3) ca. 5 s unter fliessendem Wasser abspülen,

4) 2 × je 1 s in 2-Propanol eintauchen,

5) 1 min in Polychromlösung EA 31 nach Papanicolaou stellen,

6) 5 × je 1 s in destilliertes Wasser eintauchen,

7) 5 × je 1 s in 2-Propanol eintauchen,

8) 5 × je 1 s in 2-Propanol eintauchen,

9) 5 × je 1 s in Xylol eintauchen,

10) 5 × je 1 s in Xylol eintauchen.

Der xylolfeuchte Abstrich wird in Verbindung mit einem Deckgläschen in üblicher Weise eingedeckt und nach Trocknung mikroskopisch ausgewertet. Die Zellkerne nehmen dabei eine dunkelviolette bis blauviolette Färbung an. Harris Hämatoxylinlösung färbt im Vergleich hierzu rotviolett-dunkelviolett-blauviolett.

**Patentansprüche**

1. Thiazinfarbstoffe enthaltende Färbelösung zur Anfärbung von Zellkernen, dadurch gekennzeichnet, dass die Färbelösung mindestens einen mit Aluminium(III)-, Chrom(III)-, Mangan(II)-, Kobalt(II)- oder Nickel(II)-salzen behandelten Thiazinfarbstoff wie Toluidinblau O, Neumethylenblau und/oder Azur A enthält.

2. Verfahren zur Herstellung einer Thiazinfarbstoffe enthaltenden Lösung zur Anfärbung von Zellkernen, dadurch gekennzeichnet, dass man Toluidinblau O, Neumethylenblau und/oder Azur A in Wasser löst und mit Aluminium(III)-, Chrom(III)-, Mangan(II)-, Kobalt(II)- oder Nickel(II)-salzen behandelt.

3. Verfahren nach Anspruch 2, dadurch gekennzeichnet, dass man eine wässrige Lösung von Thiazinfarbstoffen und Chrom(III)-salzen kurzzeitig erhitzt und filtriert.

4. Verwendung der Färbelösung nach Anspruch 1 zur Anfärbung von Zellkernen.

**Claims**

1. Staining solution, for staining cell nuclei, containing thiazine dyestuffs, characterised in that the staining solution contains at least one with aluminium-III-, chromium-III-, manganese-II-, cobalt-II- or nickel-II salt treated thiazine dyestuff such as toluidine blue O, new methylene blue and/or azure A.

2. Process for the preparation of a solution, for staining cell nuclei, containing thiazine dyestuffs, characterised in that toluidine blue O, new methylene blue and/or azure A are dissolved in water and treated with aluminium-III-, chromium-III-, manganese-II-, cobalt-II- or nickel-II salts.

3. Process according to claim 2, characterised in that an aqueous solution of thiazine dyestuffs and chromium-III salts is heated for a short time and filtered.

4. Use of the staining solution according to Claim 1 for staining cell nuclei.

**Revendications**

1. Solution colorante contenant des colorants thiaziniques pour colorer des noyaux cellulaires, caractérisée en ce que la solution colorante contient au moins un colorant thiazinique comme le bleu de toluidine O, le bleu de méthylène nouveau et/ou l'Azur A traité avec des sels d'aluminium (III), de chrome (III), de manganèse (II), de cobalt (II) ou de nickel (II).

2. Procédé de fabrication d'une solution contenant des colorants thiaziniques pour colorer des noyaux cellulaires, caractérisé en ce qu'on dissout du bleu de toluidine O, du bleu de méthylène nouveau et/ou de l'Azur A dans l'eau et les traite avec des sels d'aluminium (III), de chrome (III), manganèse (II), cobalt (II) ou nickel (II).

3. Procédé selon la revendication 2, caractérisé en ce qu'on chauffe un court instant une solution aqueuse de colorants thiaziniques et des sels de chrome (III) et on filtre.

4. Utilisation de la solution colorante selon la revendication 1 pour colorer des noyaux cellulaires.